# EUROPEAN PATENT APPLICATION

(11) **EP 2 724 770 A1**
(43) Date of publication of application: **30.04.2014**
(21) Application number: 12190226.6
(22) Date of filing: 26.10.2012
(51) Int. Cl.: B01D 53/62, B01D 53/78, F23J 15/04

(54) **Absorption unit for drying flue gas**

(71) Applicant: Alstom Technology Ltd, 5400 Baden (CH)
(72) Inventor: Weitzel, Markus, 55218 Ingelheim (DE); Stallmann, Olaf, 55270 Essenheim (DE); Heinz, Gerhard, 73732 Esslingen (DE)

(57) **Abstract**

A gas purification system for cleaning a carbon dioxide containing process gas generated in a boiler (2) comprises:
a liquid absorbent absorber (104) for removing at least a portion of a water vapour content of the carbon dioxide containing process gas by bringing the process gas into contact with a liquid absorbent,
a liquid absorbent desorber (106) for heating the water enriched liquid absorbent formed in the liquid absorbent absorber to cause a release of water vapour from the water enriched liquid absorbent, and
a pipe (138) for returning water lean liquid absorbent from the liquid absorbent desorber (106) to the liquid absorbent absorber (104).

## Description

### Field of the Invention

The present invention relates to a method of cleaning a carbon dioxide containing process gas generated in a boiler combusting a fuel in the presence of a gas containing oxygen gas.

The present invention further relates to a gas purification system for cleaning a carbon dioxide containing process gas generated in a boiler combusting a fuel in the presence of a gas containing oxygen gas.

### Background of the Invention

In the combustion of a fuel, such as coal, oil, peat, waste, etc., in a combustion plant, such as a power plant, a hot process gas is generated, such process gas containing, among other components, carbon dioxide CO₂. With increasing environmental demands various processes for removing carbon dioxide from the process gas have been developed. One such process is referred to as an oxy-fuel process. In an oxy-fuel process a fuel, such as one of the fuels mentioned above, is combusted in the presence of a nitrogen-lean gas in a boiler. Oxygen gas, which is provided by an oxygen source, is supplied to the boiler for oxygen gas oxidation of the fuel. In the oxy-fuel combustion process a carbon dioxide rich flue gas is produced. The CO₂ content of the carbon dioxide rich flue gas may be captured and disposed of in order to reduce the emission of carbon dioxide into the atmosphere.

CO₂ capture often comprises compression and cooling of a flue gas to separate CO₂ in liquid or solid form from non-condensable flue gas components, such as N₂ and O₂. Prior to CO₂ capture, it is generally necessary to clean the carbon dioxide rich flue gas.

US 2010/0206165 discloses a process in which a purification step is carried out between a cleaning of a carbon dioxide containing gas stream and a recovery of a purified CO₂-rich gas stream. The purification step involves utilizing an adsorbent for removing water from the gas stream.

### Summary of the Invention

An object of the present invention is to provide a method of removing water from a gas stream in a manner more efficient than that of the prior art.

This object is achieved by a method of cleaning a carbon dioxide containing process gas generated in a boiler combusting a fuel in the presence of a gas containing oxygen gas, the method comprising:
removing at least a portion of a water vapour content of the carbon dioxide containing process gas by bringing the process gas into contact with a liquid absorbent in a liquid absorbent absorber to form a carbon dioxide containing process gas with a reduced content of water vapour and a water enriched liquid absorbent,
forwarding the water enriched liquid absorbent to a liquid absorbent desorber and heating the water enriched liquid absorbent to cause a release of water vapour from the water enriched liquid absorbent to form a water lean liquid absorbent and a vent gas comprising water vapour, and
returning at least a portion of the water lean liquid absorbent to the liquid absorbent absorber.

Furthermore, the method may, according to one embodiment, comprise forwarding the vent gas to a position upstream of a gas treatment device treating the carbon dioxide containing process gas generated in the boiler to clean the vent gas.

An advantage of this method is that water vapour is efficiently removed from the carbon dioxide containing process gas, which reduces operating costs in downstream equipment, such as a CO₂ liquefaction unit and a high pressure compression unit. Furthermore, liquid absorbents generally have a high tolerance to acids that may be present in carbon dioxide containing process gas generated in the boiler, which reduces operating costs of the absorber and desorber.

The gas treatment device may, for example, be a particulate remover, such as a fabric filter or an electrostatic precipitator, an SCR reactor, a wet scrubber, a flue gas condenser, or another gas treatment device treating the carbon dioxide containing process gas generated in the boiler. Furthermore, the gas treatment device could also be a compression stage of compressor, or a gas-liquid separator arranged downstream of a gas-liquid separator.

According to one embodiment the vent gas is returned upstream of a device that removes water vapour from the carbon dioxide containing process gas generated in the boiler. An advantage of this embodiment is that water vapour may be removed also from the vent gas.

According to one embodiment the method further comprises removing at least a portion of a water content of the carbon dioxide containing process gas formed in the boiler in a flue gas condenser prior to forwarding the carbon dioxide containing process gas to the liquid absorbent absorber. An advantage of this embodiment is that the energy consumption in the desorber is reduced, and that the amount of vent gas generated is reduced. Thereby, a more efficient process is obtained. Preferably, the method comprises forwarding the vent gas to a position upstream of the flue gas condenser. An advantage of this embodiment is that water vapour of the vent gas may be condensed in the flue gas condenser and may be disposed of together with water condensed from the carbon dioxide containing process gas. Furthermore, the flue gas condenser may also have an effect of removing, at least to some degree, acid components, such as sulphur dioxide and hydrogen chloride, from the vent gas.

According to one embodiment the method further comprises forwarding the vent gas to a position upstream of a sulphur dioxide removal system treating the carbon dioxide containing process gas, and cleaning the vent gas in the sulphur dioxide removal system. An advantage of this embodiment is that acid components of the vent gas, such as sulphur dioxide and hydrochloric acid, are efficiently removed in the wet scrubber. Thereby, the vent gas is cleaned using equipment that is already used for cleaning the carbon dioxide containing process gas. The sulphur dioxide removal system may, for example, be a wet scrubber, a spray dryer absorber or another device suitable for removing sulphur dioxide.

According to one embodiment the method further comprises forwarding the vent gas to a position upstream of a selective catalytic reduction (SCR) reactor treating the carbon dioxide containing process gas, and cleaning the vent gas in the catalytic reactor. An advantage of this embodiment is that any nitrogen oxides, NOx, contained in the vent gas may be removed by selective catalytic reduction in the SCR reactor. The nitrogen oxides of the vent gas may, for example, react with a reducing agent, such as ammonia or urea, in the SCR reactor.

According to one embodiment the method further comprises introducing the vent gas into the boiler. An advantage of this embodiment is that any combustible substances contained in the vent gas, including, for example, residues of the liquid absorbent, are combusted and thereby converted, mainly, to carbon dioxide and water vapour. Furthermore, the vent gas will be forwarded through the gas cleaning system that cleans the carbon dioxide containing process gas formed in the boiler. Thereby, most, if not all, various substances that may be contained in the vent gas are removed in the various parts of the gas cleaning system.

According to one embodiment the method further comprises consuming at least a portion of an oxygen gas content of the carbon dioxide containing process gas by utilizing at least a portion of the oxygen gas present in the carbon dioxide containing process gas as oxidant in a catalytic oxidation reaction occurring in an oxidation reactor prior to forwarding the carbon dioxide containing process gas to the liquid absorbent absorber. An advantage of this embodiment is that a liquid absorbent which is sensitive to oxygen gas will be exposed to a lower concentration of oxygen gas. Thereby the technical life of such a liquid absorbent will be increased. Furthermore, by removing at least a portion of the oxygen gas present in the carbon dioxide containing process gas by oxidation, a smaller amount of oxygen gas will need to be removed in downstream equipment, such as a CO₂ liquefaction unit.

According to one embodiment, the carbon dioxide containing process gas is forwarded through a selective catalytic reduction (SCR) reactor after passing through an oxidation reactor. An advantage of this embodiment is that any nitrogen oxides formed in the oxidation reactor are removed in the selective catalytic reduction reactor, for example by reacting with a reducing agent, such as ammonia or urea. Furthermore, the gas temperature suitable for the oxidation reaction occurring in the oxidation reactor is rather similar to the gas temperature suitable for the reduction reaction in the SCR reactor. Thereby, energy costs are minimized by arranging the oxidation reactor and the SCR reactor in series, with the oxidation reactor upstream of the SCR reactor. Preferably, the SCR reactor is arranged directly downstream of the oxidation reactor.

According to one embodiment the liquid absorbent comprises at least one substance chosen in the group of substances comprising: glycols, for example triethyleneglycol, and glycerols. An advantage of this embodiment is that glycols and glycerols have been found to be efficient in removing water vapour from the carbon dioxide containing process gas.

According to one embodiment the method further comprises bringing the carbon dioxide containing process gas into contact with a liquid absorbent in the liquid absorbent absorber at a temperature of 10-20°C to capture water vapour. A temperature of less than 10°C increases the risk of formation of unwanted carbon dioxide hydrates by carbon dioxide and water reacting with each other. A temperature of more than 20°C reduces the drying efficiency in the absorption. More preferably, the temperature for the absorption is 11-16°C, and even more preferably 12-14°C.

According to one embodiment the liquid absorbent absorber operates at an absorption pressure of 5 to 45 bar(absolute). Operating at these pressures reduces the required size of the absorber.

According to one embodiment the liquid absorbent desorber operates at a pressure of 0.1 to 10 bar(absolute). A lower pressure reduces the temperature for desorption, while, on the other hand, a high pressure reduces the size of the desorber. According to one embodiment, the pressure in the liquid absorbent desorber is 0.8 to 1.2 bar(absolute). An advantage of these pressures is that the vent gas is at near atmospheric pressure, and may be easily introduced into the carbon dioxide containing process gas, which is often at close to atmospheric conditions, upstream of at least one gas treatment device.

According to one embodiment the method further comprises heating the water enriched liquid absorbent to a temperature of 50-230°C, more preferably 100-140°C, in the liquid absorbent desorber to cause release of water vapour from the water enriched liquid absorbent. A temperature of less than 50°C increases the time it takes for water vapour to be released from the liquid absorbent. A temperature of more than 230°C increases the energy cost, and increases the risk that the liquid absorbent is degraded.

According to one embodiment the method further comprises operating the liquid absorbent absorber in continuous operating mode. According to one embodiment the method further comprises operating the liquid absorbent desorber in continuous operating mode. An advantage of each of these embodiments is that fluctuations in the process are reduced, compared to a system operating in batch or semi-batch mode. Furthermore, the need for buffering and storing tanks is reduced, thereby reducing the investment cost. Furthermore, there is no need for parallel devices, with one device operating for absorbing water vapour, and the other one undergoing desorption.

According to one embodiment the method further comprises cleaning a carbon dioxide containing process gas being a carbon dioxide rich flue gas containing at least 40 % by volume of carbon dioxide and being generated in an oxy-fuel boiler. The present method has been found to be particularly efficient in oxy-fuel boiler applications, where there may a considerable amount of contaminants, such as sulphur dioxide and hydrochloric acid, in the process gas when the latter is exposed to removal of water vapour.

A further object of the present invention is to provide a gas purification system efficient for cleaning a carbon dioxide rich flue gas stream.

This object is achieved by a gas purification system for cleaning a carbon dioxide containing process gas generated in a boiler combusting a fuel in the presence of a gas containing oxygen gas, the gas purification system comprising:
a liquid absorbent absorber for removing at least a portion of a water vapour content of the carbon dioxide containing process gas by bringing the process gas into contact with a liquid absorbent to form a carbon dioxide containing process gas with a reduced content of water vapour and a water enriched liquid absorbent,
a liquid absorbent desorber for heating the water enriched liquid absorbent formed in the liquid absorbent absorber to cause a release of water vapour from the water enriched liquid absorbent to form a water lean liquid absorbent and a vent gas comprising water vapour, and
a pipe for returning water lean liquid absorbent from the liquid absorbent desorber to the liquid absorbent absorber.

Furthermore, the gas purification system may, according to one embodiment, comprise a duct for forwarding the vent gas to a position upstream of a gas treatment device treating the carbon dioxide containing process gas generated in the boiler to clean the vent gas.

An advantage of this gas purification system is that it provides for efficient removal of water vapour and low investment and operating costs.

According to one embodiment an oxidation reactor is arranged upstream, as seen with respect to the flow of carbon dioxide containing process gas, of the liquid absorbent absorber for consuming at least a portion of an oxygen gas content of the carbon dioxide containing process gas by utilizing at least a portion of the oxygen gas present in the carbon dioxide containing process gas as oxidant in a catalytic oxidation reaction occurring in the oxidation reactor. An advantage of this embodiment is that the technical life of liquid absorbents sensitive to oxygen gas is prolonged.

According to one embodiment a SCR reactor is arranged downstream of the oxidation reactor. The SCR reactor reduces at least a portion of nitrogen oxides formed in the oxidation reactor, and may also reduce at least a portion of nitrogen oxides formed in the boiler and forming part of the carbon dioxide containing process. The SCR reactor of the gas purification system may complement an SCR reactor of a gas cleaning system, or may replace an SCR reactor of the gas cleaning system, such that the entire removal of nitrogen oxides occur in the SCR reactor arranged downstream of the oxidation reactor.

According to one embodiment the system comprises a duct forwarding the vent gas to the boiler. An advantage of this embodiment is that efficient treatment of the vent gas is provided for.

According to one embodiment the liquid absorbent absorber is arranged within and/or downstream of a low pressure compression unit of a gas compression and purification unit (GPU) operating to clean and compress the carbon dioxide containing process gas. An advantage of this embodiment is that absorption of water vapour from the carbon dioxide containing process gas occurs at an increased pressure, which reduces the physical size of the liquid absorber. Furthermore, the carbon dioxide containing process gas has normally been exposed to a partial reduction of the water content in, for example, a flue gas condenser and/or a gas-liquid separator separating water from gas downstream of a compression stage of the low pressure compression unit. Thereby, the amount of water vapour that is to be removed in the liquid absorbent absorber is reduced.

According to one embodiment the gas purification system further comprises a gas drier provided with a solid adsorbent and arranged downstream, as seen with respect to the flow of carbon dioxide containing process gas, of the liquid absorbent absorber. An advantage of this embodiment is that minor trace amounts of water vapour that remain in the carbon dioxide containing process gas after passing through the liquid absorbent absorber may be removed, to further dry the carbon dioxide containing process gas.

There is, furthermore, provided a boiler system comprising a boiler for combusting a fuel in the presence of a gas containing oxygen gas, a gas cleaning system for cleaning a carbon dioxide containing process gas generated in the boiler, and a gas purification system as described hereinabove for removing at least a portion of a water vapour content of the carbon dioxide containing process gas.

The above described and other features are exemplified by the following figures and detailed description. Further objects and features of the present invention will be apparent from the description and the claims.

### Brief description of the Drawings

The invention is described in more detail below with reference to the appended drawings in which:
Fig. 1 is a schematic side view and illustrates a boiler system.
Fig. 2 is a schematic side view and illustrates a flue gas condenser and a gas compression and purification unit.

### Description of Preferred Embodiments

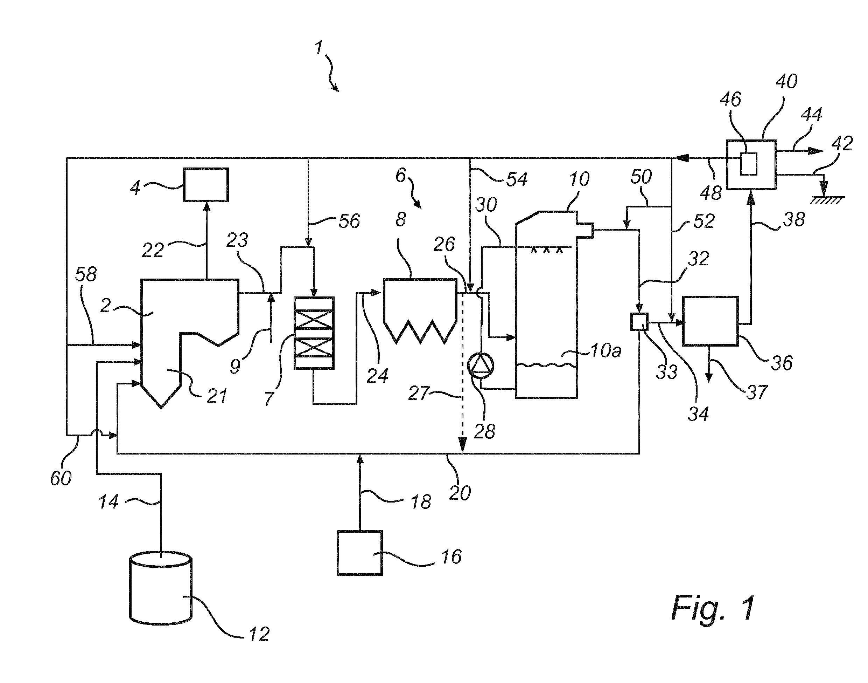

Fig. 1 is a schematic representation of a boiler system 1, as seen from the side thereof. The boiler system 1 comprises, as main components, a boiler 2, being in this embodiment an oxy-fuel boiler, a steam turbine electric power generation system 4, and a gas cleaning system 6. The gas cleaning system 6 comprises a selective catalytic reduction (SCR) unit 7, a particulate removal device 8, which may, for example, be a fabric filter or an electrostatic precipitator, and a sulphur dioxide removal system 10, which may be a wet scrubber.

A fuel, for example coal, oil, or peat, is contained in fuel storage 12, and can be supplied to the boiler 2 via a fluidly connected supply pipe 14. An oxygen gas source 16 is operative for supplying oxygen gas in a manner known to those skilled in the art. The oxygen gas source 16 may be an air separation plant (ASU) operative for separating oxygen gas from air, an oxygen separating membrane, a storage tank, or any other source for providing oxygen gas for the boiler system 1. A supply duct 18 allows flow of the produced oxygen gas, comprising typically 90-99.9 % by volume oxygen, O₂, to the fluidly connected boiler 2. A duct 20 enables a flow of recirculated flue gas, which contains carbon dioxide, to the fluidly connected boiler 2. As indicated in Fig. 1, the supply duct 18 joins the duct 20 upstream of the boiler 2, such that oxygen gas and recirculated flue gas, containing carbon dioxide, may become mixed with each other to form an oxidant gas mixture containing typically about 15-75 % by volume of oxygen gas, the balance being mainly carbon dioxide and water vapour, upstream of the boiler 2. Since almost no air enters the boiler 2 there is almost no nitrogen gas supplied to the boiler 2. In practical operation, less than 3 % by volume of the total gas volume supplied to the boiler 2 is air, which mainly enters the boiler 2 as a leakage of air.

The boiler 2 is operative for combusting the fuel, supplied via the supply pipe 14, in the presence of the oxygen gas, mixed with the recirculated flue gas, containing carbon dioxide, supplied via the fluidly connected duct 20. Combustion occurs in a portion of the boiler 2 referred to herein as a combustion zone 21. A steam pipe 22 enables a flow of steam produced in the boiler 2 as a result of the combustion, to the steam turbine electric power generation system 4, operative for generating power in the form of electric power.

The combustion of the fuel in the combustion zone 21 of the boiler 2 results in the formation of a carbon dioxide containing process gas which, when the boiler is an oxy-fuel boiler 2 is a carbon dioxide rich flue gas. By "carbon dioxide rich flue gas" is meant that the flue gas leaving the oxy-fuel boiler 2 will contain at least 40 % by volume of carbon dioxide, CO₂. Often more than 50% by volume of the flue gas leaving the boiler 2 will be carbon dioxide. The balance of the "carbon dioxide rich flue gas" will be about 20-50% by volume of water vapour (H₂O), 2-7 % by volume of oxygen (O₂), since a slight oxygen excess is often preferred in the boiler 2, and totally about 0-10 % by volume of other gases, including mainly nitrogen (N₂) and argon (Ar), since some leakage of air can seldom be completely avoided.

The carbon dioxide rich flue gas generated in the boiler 2 may typically comprise contaminants in the form of, for example, dust particles, hydrochloric acid, HCl, sulphur oxides, SO_{X}, and heavy metals, including mercury, Hg, that should be removed, at least partly, from the carbon dioxide rich flue gas prior to disposing of the carbon dioxide. Furthermore, an amount of nitrogen oxides, i.e., nitrogen mono-oxide, NO, and/or nitrogen dioxide, NO₂, may also be generated in the boiler 2 from the leakage of air into the boiler 2, and/or from nitrogen species contained in the fuel supplied to the boiler 2.

A duct 23 enables a flow of carbon dioxide rich flue gas generated in the boiler 2 to the fluidly connected selective catalytic reduction (SCR) reactor unit 7 for removing nitrogen oxides. In the SCR unit 7 nitrogen oxides of the flue gas are catalytically converted to nitrogen gas by a reaction with a reducing agent, such as ammonia or urea. The reducing agent is supplied via a pipe 9 to the flue gas of the duct 23 upstream of the SCR unit 7. An example of an SCR reduction plant can be found in US 6,146,605.

A duct 24 enables a flow of carbon dioxide rich flue gas from the SCR unit 7 to the fluidly connected dust removal device 8. The dust removal device 8, which may include an electrostatic precipitator which is per se known from, for example, US 4,502,872, and/or a fabric filter, which is per se known from, for example, US 4,336,035, removes most of the dust particles from the carbon dioxide rich flue gas.

A duct 26 enables a flow of carbon dioxide rich flue gas from the dust removal device 8 to the fluidly connected wet scrubber 10 of the gas cleaning system 6. The wet scrubber 10 illustrated in Fig. 1 is of the tower scrubber type, a scrubber type which is per se known from, for example, EP 0 162 536, but may, alternatively, be of another type, for example a bubbling bed scrubber, an example of which is disclosed in WO 2005/007274, and comprises a circulation pump 28 operative for circulating, in a fluidly connected slurry circulation pipe 30, an absorption liquid. The absorption liquid comprises for example lime stone. The slurry circulation pipe 30 in the wet scrubber 10 achieves good contact between the absorption liquid and the flue gas flowing into the wet scrubber 10 via the fluidly connected duct 26 and flowing substantially vertically upwards inside 10a the wet scrubber 10 to effect efficient removal of sulphur dioxide, SO₂, and other acid gases from the carbon dioxide rich flue gas.

An at least partially cleaned carbon dioxide rich flue gas exits wet scrubber 10 via a fluidly connected duct 32 to a fluidly connected gas splitting point 33, where the at least partially cleaned carbon dioxide rich flue gas is divided into two flows, namely a first flow, which via the fluidly connected duct 20 is recirculated back to the boiler 2, and a second flow, which via a fluidly connected duct 34 is forwarded to a flue gas condenser 36. The first flow, which is recirculated back to the boiler 2 via duct 20, typically comprises 50 - 75% by volume of the total flow of the partially cleaned carbon dioxide rich flue gas leaving the wet scrubber 10. The second flow, typically comprising 25 - 50% by volume of the total flow of the partially cleaned carbon dioxide rich flue gas leaving the wet scrubber 10, is hence forwarded via the duct 34 to the flue gas condenser 36. According to an alternative embodiment, the first flow may be recirculated back to the boiler 2 via a fluidly connected duct 27 without passing through the wet scrubber 10.

In the flue gas condenser 36, the flue gas is cooled below its water dew point and the heat released by the resulting condensation is recovered as low temperature heat. Examples of flue gas condensers are described in EP 2 335 804 A1 with reference to Figs. 3 and 4 of that document.

Returning to Fig. 1 of the present disclosure, the water content of the flue gas may for example be reduced from about 20-50 % by volume as fed into the flue gas condenser 36 to about 2-7 % by volume leaving the flue gas condenser 36. Depending on the pH and temperature in the flue gas condenser 36, flue gas condensation may also lead to a reduction of sulfur oxides, SO_{X}, and other acid gases in the flue gas. Sulfur oxides in the flue gas are captured in the formed condensate and thereby separated from the flue gas. Furthermore, wash liquid or slurry, e.g., lime slurry, entrained in the flue gas from the preceding sulfur dioxide removal process, for example from the lime stone based wet scrubber 10, is likewise removed during the condensation. Hence, problems of fouling and/or clogging of downstream gas drier and/or gas heater surfaces are reduced. The flue gas condenser 36 is provided with a circulation pump operative for circulating a cooling liquid via a fluidly connected circulation pipe positioned in the flue gas condenser 36 in a manner which will be described in more detail hereinafter. The cooling liquid circulated in the flue gas condenser 36 cools the partially cleaned carbon dioxide rich flue gas to a temperature below its saturation temperature, with respect to water vapor. As such, condensation of at least a portion of the water vapor content of the partially cleaned carbon dioxide rich flue gas flowing from the wet scrubber 10 occurs. The condensed water leaves the flue gas condenser 36 via a fluidly connected disposal pipe 37. A portion of the condensed water leaving the flue gas condenser 36 via the pipe 37 may flow to the wet scrubber 10 as make up water. A further portion of the condensed water may flow to a water treatment unit, in which the condensed water is treated prior to being reused in the process, for example as boiler water, or disposal. The cleaned carbon dioxide rich flue gas leaves the flue gas condenser 36 via a fluidly connected duct 38 and flows to a gas compression and purification unit (GPU) 40.

The GPU 40 generates, as will be described in more detail hereinafter, a relatively pure compressed carbon dioxide gas, typically comprising 99% by volume, or more, of CO₂, at a pressure of, for example, 50 to 300 bar(absolute pressure), more preferably 100-200 bar(absolute pressure). The relatively pure compressed carbon dioxide gas can be forwarded, via a pipe 42, to carbon dioxide sequestration, and/or could be forwarded, via a pipe 44, to an industrial installation being in need of pure carbon dioxide gas. One example of a reuse of the compressed carbon dioxide is enhanced oil recovery (EOR). In EOR the carbon dioxide is injected into an oil well for the purpose of extracting more oil from the well. Potentially, the carbon dioxide could be left in the oil well afterwards, which means that the EOR would, in such a case, involve a reuse of carbon dioxide followed by a carbon dioxide sequestration.

The GPU 40 comprises a drying unit 46, which will be described in more detail hereinafter. The drying unit 46 serves to remove further water from the flue gas, to cause a further reduction of the amount of water vapour of the flue gas. Vent gas, which contains water vapour, and optionally other contaminants, such as sulphur dioxide, SO₂, hydrochloric acid, HCl, and nitrogen oxides, NOₓ, is removed from the drying unit 46 via a vent gas duct 48.

The vent gas from the drying unit 46 is, according to one embodiment, mixed with carbon dioxide rich flue gas in a position which is located upstream of the flue gas condenser 36. Hence, in accordance with a first embodiment, the vent gas from the drying unit 46 is forwarded via a duct 50 to the duct 32, via which partially cleaned carbon dioxide rich flue gas exits wet scrubber 10. In accordance with a second embodiment, the vent gas from the drying unit 46 is forwarded via a duct 52 to the duct 34, via which said second flow is forwarded to the flue gas condenser 36. In the flue gas condenser 36 at least a portion of the content of water vapour of the vent gas is condensed to form liquid water that leaves the flue gas condenser 36 via the disposal pipe 37. Furthermore, the flue gas condenser 36 may also result in removal of at least a portion of the content of acid substances, such as sulphur dioxide, SO₂ and hydrochloric acid, HCl, from the vent gas.

According to third embodiment, the vent gas from the drying unit 46 is forwarded via a duct 54 to the duct 26 that enables a flow of carbon dioxide rich flue gas from the dust removal device 8 to the fluidly connected wet scrubber 10. The wet scrubber 10 may result in removal of at least a portion of the content of acid substances, such as sulphur dioxide, SO₂ and hydrochloric acid, HCl, from the vent gas. Furthermore, at least a portion of the content of water vapour of the vent gas may be condensed in the wet scrubber 10. Further condensation of water vapour occurs in the condenser 36, which is located downstream of the wet scrubber 10.

According to a fourth embodiment, the vent gas from the drying unit 46 is forwarded via a duct 56 to the duct 23 that enables a flow of carbon dioxide rich flue gas from the boiler 2 to the fluidly connected SCR unit 7. The SCR unit 7 may result in removal of at least a portion of the content of nitrogen oxides from the vent gas. Additionally, removal of water vapour and acid substances will be effected as the vent gas passes further through the wet scrubber 10 and the condenser 36.

According to a fifth embodiment, the vent gas from the drying unit 46 is forwarded via a duct 58 to the boiler 2 for participating in the combustion process occurring in the combustion zone 21. By passing the vent gas to the boiler 2 combustible components, such as organic substances, of the vent gas are combusted. Additionally, removal of nitrogen oxides, water vapour and acid substances will be effected as the vent gas passes further through the SCR unit 7, the wet scrubber 10, and the condenser 36. According to a sixth embodiment, the vent gas from the drying unit 46 is forwarded via a duct 60 to the duct 20 to mix with the recirculated flue gas and to then be forwarded to the boiler 2 for participating in the combustion process occurring in the combustion zone 21.

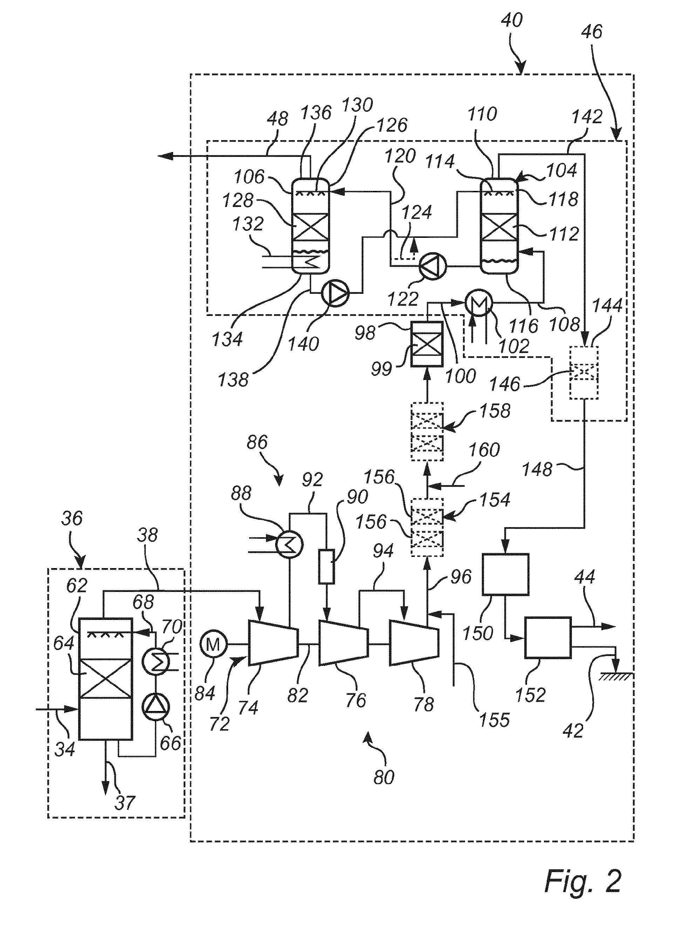

Fig. 2 illustrates an embodiment of the flue gas condenser 36 and of the GPU 40 in more detail. It will be appreciated that the illustration of Fig. 2 is schematic, and that a GPU 40 may comprise further devices for gas purification, etc. The flue gas condenser 36 illustrated in Fig. 2 is of a direct contact cooler (DCC) type in which the flue gas is brought into direct contact with a cooling fluid, which may typically be water. As alternative, the flue gas condenser could be a non-direct contact cooler, in which, for example, the flue gas flows inside of tubes, and in which the cooling fluid flows on the outside of the tubes, as illustrated in Fig. 4 of EP 2 335 804 A1.

Returning to Fig. 2 of the present disclosure, the flue gas condenser 36 comprises a tower 62, which is filled with a packing material 64 for providing good contact between the partly cleaned carbon dioxide rich flue gas forwarded via duct 34 and the cooling liquid being circulated in the condenser 36 by means of a pump 66 and a circulation pipe 68. A heat exchanger 70 cools the circulating cooling liquid to a suitable temperature, such as 2 - 35°C. Water vapour is condensed from the flue gas as a result of the cooling in the condenser 36 and is drained from the condenser 36 via pipe 37. The carbon dioxide rich flue gas from which at least a portion of its content of water vapour has been removed leaves the condenser 36 via the duct 38.

The GPU 40 comprises at least one compressor having at least one, and typically two to ten compression stages for compressing the cleaned carbon dioxide rich flue gas. Each compression stage could be arranged as a separate unit. As an alternative, and as illustrated in Fig. 2, several compression stages could be operated by a common drive. The GPU 40 of Fig. 2 comprises a low pressure compressor 72 having a first compression stage 74, a second compression stage 76, and a third compression stage 78. The first through third compression stages 74, 76, 78 form together a low pressure compression unit 80 of the GPU 40. The compression stages 74, 76, 78 are connected to a common drive shaft 82 driven by a motor 84 of the compressor 72.

The low pressure compression unit 80 may comprise an inter-cooling unit 86, downstream of some, or all, of the compression stages 74, 76, 78. One such optional inter-cooling unit 86 is illustrated in Fig. 2 downstream of the first compression stage 74. The inter-cooling unit 86 comprises a gas cooler 88 and a gas-liquid separator 90. The gas cooler 88 cools the compressed carbon dioxide rich flue gas to a temperature below the dew point temperature with respect to water of the compressed carbon dioxide rich flue gas resulting in the condensation of the water vapour in the flue gas. The gas-liquid separator 90 separates water droplets, generated as an effect of condensation caused by the cooling of the gas in the gas cooler 88, from the remaining flue gas, and forwards such separated water droplets to a water treatment unit, disposal, etc., not shown in Fig. 2.

The partially cleaned carbon dioxide rich flue gas enters the GPU 40 from the flue gas condenser 36 via the fluidly connected duct 38 and is introduced into the first compression stage 74. A duct 92 enables, optionally via the inter-cooling unit 86, the flow of compressed gas from the first compression stage 74 to the second compression stage 76. A duct 94 enables, optionally via an inter-cooling unit, not shown in Fig. 2, the flow of compressed gas from the second compression stage 76 to the third compression stage 78. A duct 96 enables the flow of compressed gas from the third compression stage 78.

The GPU 40 may comprise a mercury adsorber 98 arranged downstream of one of the compression stages 74, 76, 78. In the embodiment of Fig. 2, the mercury adsorber 98 is arranged downstream of the third compression stage 78, i.e., downstream of the low pressure compression unit 80. It will be appreciated that the mercury adsorber 98 could also have been arranged for treating the flue gas between the first and second compression stages 74, 76, or between the second and third compression stages 76, 78. The mercury adsorber 98 is provided with a solid adsorbent 99 comprising a mercury adsorbent having an affinity for mercury. The adsorbent may, for example, be activated carbon impregnated with sulphur, or another material that is, as such, known for its affinity for mercury.

A duct 100 enables the flow of compressed gas, having an absolute pressure of about 25-40 bar(absolute), from the mercury adsorber 98 to the drying unit 46. The drying unit 46 comprises, as its main components, an optional gas cooler 102, a liquid absorbent absorber 104, and a liquid absorbent desorber 106.

The duct 100 forwards the compressed gas to the gas cooler 102. The gas cooler 102 serves to cool the flue gas to a suitable temperature for absorption. The temperature for absorption is preferably in the range of 10-20°C.

The cooled flue gas is forwarded, via a duct 108, from the gas cooler 102 to the liquid absorbent absorber 104. The absorber 104 comprises an absorber tower 110, a gas-liquid contacting packing material 112, and a liquid distributor 114. The cooled flue gas is introduced in a lower end 116 of the absorber tower 110 and is forwarded upwards through the gas-liquid contacting packing material 112 and is released from the absorber 104 at an upper end 118 thereof. Examples of packing materials suitable as the gas-liquid contacting packing material 112 include Mellapak^{™} available from Sulzer Chemtech AG, Winterthur, CH, and Pall^{™} rings available from Raschig GmbH, Ludwigshafen, DE.

A water lean liquid absorbent is introduced in the absorber tower 110 via the liquid distributor 114 and is forwarded downwardly through the gas-liquid contacting packing material 112. In the gas-liquid contacting packing material 112 the water lean liquid absorbent flowing downwards absorbs water vapour from the flue gas flowing upwards and forms water enriched liquid absorbent. Thereby, the content of water vapour of the flue gas is reduced, i.e., the flue gas is dried, and the flue gas released from the absorber 104 at the upper end 118 thereof has a lower content of water vapour than the flue gas entering the absorber 104 at the lower end 116 thereof.

The liquid absorbent could be any liquid absorbent that has affinity for water vapour. According to a preferred embodiment the liquid absorbent comprises glycols, for example triethyleneglycol, glycerols, or a mixture thereof.

The water enriched liquid absorbent, comprising water that has been absorbed from the flue gas, is collected at the lower end 116 of the absorption tower 110 and is pumped, via a pipe 120, by a pump 122 to the liquid absorbent desorber 106. Optionally, a portion of the water enriched liquid absorbent pumped by the pump 122 may be re-circulated, via a pipe 124, to the liquid distributor 114 of the absorber 104.

The liquid absorbent desorber 106 comprises a desorbing tower 126, a packing material 128, a liquid distributor 130, and a heater 132. The water enriched liquid absorbent is introduced in the desorbing tower 126 via the liquid distributor 130 and is forwarded downwardly through the packing material 128 and is collected at a lower end 134 of the tower 126. The heater 132 may, for example, be an electrical heater, a liquid-liquid heater, a gas-liquid heater or a steam heater, using, for example, a heating media available in the boiler system 1, such as hot flue gas, low pressure steam, or hot water. The heater 132 heats the water enriched liquid absorbent to a temperature which is higher than that temperature which the liquid absorbent has in the absorber 104, and typically heats the liquid absorbent to a temperature of 50-230°C. The heat causes a release of water vapour from the water enriched liquid absorbent. Hence, a flow of water vapour flows upwards through the packing material 128 and causes, while flowing upwards, a heating of the water enriched liquid absorbent flowing downwards and a release of water vapour from the water enriched liquid absorbent. Optionally, other components, such as gaseous contaminants, for example mercury, Hg, sulphur dioxide, SO₂, hydrochloric acid, HCl, and nitrogen oxides, NOₓ, captured in the absorber 104, may also be released from the water enriched liquid absorbent. Thereby, the content of water of the water enriched liquid absorbent is reduced, and a water lean liquid absorbent is collected at the lower end 134 of the tower 126. At an upper end 136 of the tower 126 vent gas comprising water vapour, and optionally gaseous contaminants as noted above, released from the water enriched liquid absorbent is collected. The vent gas is forwarded, via the duct 48, further to the boiler 2 and/or the gas cleaning system 6 for being introduced therein, as described hereinbefore with reference to Fig. 1. Returning to Fig. 2, the water lean liquid absorbent collected at the lower end 134 of the tower 126 of the desorber 106 is pumped, via a pipe 138, by a pump 140 to the absorber 104, and is introduced in the absorber 104 via the liquid distributor 114. Optionally, a portion of the water lean liquid absorbent pumped by the pump 140 may be re-circulated via a pipe, not shown, to the liquid distributor 130 of the desorber 106. Optionally, the water lean liquid absorbent flowing in the pipe 138 may exchange heat with the water enriched liquid absorbent flowing in the pipe 120 in a heat exchanger, schematically indicated in Fig. 2 as the junction between pipe 138 and pipe 120, to reduce the amount of heat that needs to be supplied to heater 132.

The absorber 104 operates at a pressure of typically 5-45 bar(absolute), more typically 25-40 bar(absolute), and a temperature of 10-20°C, more preferably 11-16°C, to absorb water vapour from the flue gas in the liquid absorbent, and the desorber 106 operates at a pressure of typically 0.1 to 10 bar(absolute), more typically 0.8 to 1.2 bar(absolute), and a temperature of 50-230°C, more preferably 100-140°C, to desorb water from the liquid absorbent to regenerate the same. The dried flue gas is forwarded from the absorber 104 via a duct 142. Typically, the drying unit 46 would cause a reduction in the content of water vapour of the flue gas from a content of 600 to 2000 ppm by volume of water vapour of the flue gas of the duct 108 and down to a content of below 10 ppm and up to 50 ppm by volume of water vapour of the flue gas of the duct 142.

Optionally, the drying unit 46 could comprise a gas drier 144 to remove at least a portion of the remaining content of water vapour from the flue gas. The gas drier 144 is provided with a solid adsorbent 146 comprising an adsorbent for adsorbing water vapour and optionally other gas components, such as nitrogen oxides. The solid adsorbent may, for example, comprise activated carbon, silica gel, activated aluminium oxide, zeolitic molecular sieves, such as sodium aluminosilicates, and carbon molecular sieves. A thorough description of various useful solid adsorbents is provided in chapter 2 of the Handbook "Adsorption aus der Gasphase", by Werner Kast, Wiley-VCH (1988), ISBN-10: 3527267190. A zeolitic molecular sieve is one example of such a suitable solid adsorbent. The gas drier 144 receives flue gas via the duct 142. Hence, the gas drier 144 is arranged downstream of the liquid absorbent absorber 104 as seen with respect to the flow direction of the flue gas.

The dried carbon dioxide rich flue gas is forwarded, via a duct 148, from the drying unit 46 to a CO₂ liquefaction unit 150 and a high pressure compression unit 152, prior to being forwarded, via the pipe 42, to carbon dioxide sequestration, and/or, via the pipe 44, to an industrial installation being in need of pure carbon dioxide gas.

Some types of liquid absorbents, such as glycols, are sensitive to degradation upon contact with oxygen. A catalytic oxidation reactor 154, may, in accordance with one alternative embodiment, be installed upstream of the drying unit 46. In accordance with one alternative embodiment, the oxidation reactor 154 could be installed in the duct 96. It would also be possible, however, to install the oxidation reactor 154 in the duct 92 or 94. At least a portion of the oxygen gas present in the carbon dioxide rich flue gas is consumed as oxidant in a catalytic oxidation reaction occurring in the oxidation reactor 154. The oxygen gas reacts, in the oxidation reactor 154, with at least one combustible substance present in, and/or added to, the carbon dioxide rich flue gas. The oxidation reaction consumes at least a portion of the oxygen gas such that an oxygen depleted carbon dioxide rich flue gas is formed and is forwarded to the drying unit 46. According to one embodiment a combustible substance, which may, for example, be methane, ethane, propane, butane, LPG (liquid petroleum gas), natural gas, hydrogen gas, etc., is supplied upstream of the catalytic oxidation reactor 154 via a pipe 155 to be mixed with the carbon dioxide rich flue gas and to react with oxygen gas in the catalytic oxidation reactor 154 to consume at least a portion of the oxygen gas. According to one embodiment the carbon dioxide rich flue gas contains in itself at least one combustible substance, which may reduce or even eliminate the need for a supply of combustible substance via pipe 155. The catalytic oxidation reactor 154 comprises catalytic material 156 that promotes the oxidation reaction between oxygen gas and the at least one combustible substance. The catalytic material 156 may comprise, for example, Cr, Cu, Mn, Pd, Pt, and/or a mixture of V₂O₅/WO₃/TiO₂/precious metal. Typically, the oxidation reactor 154 would operate at a gas temperature of 150-650°C, more preferably 350-600°C. Optionally a heat exchanger, not shown for reasons of maintaining clarity of illustration, may be arranged for heating the compressed gas leaving the third compression stage 78 to a suitable temperature for the oxidation reactor 154. The oxidation in the oxidation reactor 154 hence causes a reduction in the concentration of oxygen gas of the carbon dioxide rich flue gas. Thereby, the drying unit 46 works on a flue gas with a low content of oxygen gas. In accordance with one embodiment, a selective catalytic reduction (SCR) reactor unit 158 is arranged downstream of the oxidation reactor 154. A reducing agent, such as ammonia or urea, may be supplied to the SCR unit 158 via a pipe 160. The SCR unit 158 would typically operate at a gas temperature of 180-350°C. The SCR unit 158 may be used together with the SCR unit 7 illustrated in Fig. 1, or may replace the SCR unit 7, such that the complete system comprises a single SCR unit 158, located just upstream of the drying unit 46.

It will be appreciated that numerous variants of the embodiments described above are possible within the scope of the appended claims.

Hereinbefore it has been described that the boiler system 1 comprises an oxy-fuel boiler 2. It will be appreciated that the boiler system 1 may also comprise other types of boilers, other types of gas cleaning systems, and other types of gas processing units (GPU). For example, the disclosed embodiments and methods for removing water vapour from a carbon dioxide rich flue gas may also be arranged in a boiler system including a boiler which uses ambient air as oxidant, and which comprises, for example, an amine scrubber or a chilled ammonia process for separating carbon dioxide from a gas stream comprising carbon dioxide, nitrogen gas, and oxygen to form the carbon dioxide containing process gas. An example of a chilled ammonia system is disclosed in WO 2006/022885.

Hereinbefore it has been described that the vent gas may be supplied uppstream of a gas treatment device which may be, for example, a particulate remover, such as a fabric filter or an electrostatic precipitator, an SCR reactor, a wet scrubber, a flue gas condenser, or another gas treatment device treating the carbon dioxide containing process gas generated in the boiler. According to one alternative embodiment, the vent gas could be supplied upstream of, for example, a compression stage 74 having a gas cooler 88 and a gas-liquid separator 90. At least a portion of the water vapour content of the vent gas would be condensed in the cooler 88 and would be removed in the gas-liquid separator 90. Preferably, the vent gas is returned upstream of a device, such as a flue gas condenser, or a gas-liquid separator, that removes water vapour from the carbon dioxide containing process gas generated in the boiler, such that water vapour may be removed also from the vent gas.

To summarize, a gas purification system for cleaning a carbon dioxide containing process gas generated in a boiler (2) comprises:
a liquid absorbent absorber (104) for removing at least a portion of a water vapour content of the carbon dioxide containing process gas by bringing the process gas into contact with a liquid absorbent,
a liquid absorbent desorber (106) for heating the water enriched liquid absorbent formed in the liquid absorbent absorber to cause a release of water vapour from the water enriched liquid absorbent, and
a pipe (138) for returning water lean liquid absorbent from the liquid absorbent desorber (106) to the liquid absorbent absorber (104).

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A method of cleaning a carbon dioxide containing process gas generated in a boiler (2) combusting a fuel in the presence of a gas containing oxygen gas, the method comprising:
removing at least a portion of a water vapour content of the carbon dioxide containing process gas by bringing the process gas into contact with a liquid absorbent in a liquid absorbent absorber (104) to form a carbon dioxide containing process gas with a reduced content of water vapour and a water enriched liquid absorbent,
forwarding the water enriched liquid absorbent to a liquid absorbent desorber (106) and heating the water enriched liquid absorbent to cause a release of water vapour from the water enriched liquid absorbent to form a water lean liquid absorbent and a vent gas comprising water vapour,
returning at least a portion of the water lean liquid absorbent to the liquid absorbent absorber (104), and
forwarding the vent gas to a position upstream of a gas treatment device (7, 8, 10, 36, 74, 90) treating the carbon dioxide containing process gas generated in the boiler (2) to clean the vent gas.

2. A method according to claim 1, further comprising removing at least a portion of a water content of the carbon dioxide containing process gas formed in the boiler in a flue gas condenser (36) prior to forwarding the carbon dioxide containing process gas to the liquid absorbent absorber (104).

3. A method according to any one of the preceding claims, further comprising forwarding the vent gas to a position upstream of a sulphur dioxide removal system (10) treating the carbon dioxide containing process gas, and cleaning the vent gas in the sulphur dioxide removal system (10), and/or forwarding the vent gas to a position upstream of a selective catalytic reduction (SCR) reactor (7) treating the carbon dioxide containing process gas, and cleaning the vent gas in the catalytic reactor (7).

4. A method according to any one of the preceding claims, further comprising introducing the vent gas into the boiler (2).

5. A method according to any one of the preceding claims, further comprising consuming at least a portion of an oxygen gas content of the carbon dioxide containing process gas by utilizing at least a portion of the oxygen gas present in the carbon dioxide containing process gas as oxidant in a catalytic oxidation reaction occurring in an oxidation reactor (154) prior to forwarding the carbon dioxide containing process gas to the liquid absorbent absorber (104).

6. A method according to claim 5, further comprising forwarding the carbon dioxide containing process gas through a selective catalytic reduction (SCR) reactor (158) after passing through the oxidation reactor (154).

7. A method according to any one of the preceding claims, wherein the liquid absorbent comprises at least one substance chosen in the group of substances comprising: glycols and glycerols.

8. A method according to any one of the preceding claims, further comprising bringing the carbon dioxide containing process gas into contact with a liquid absorbent in the liquid absorbent absorber (104) at a temperature of 10-20°C to capture water vapour, and/or comprising heating the water enriched liquid absorbent to a temperature of 50-230°C, more preferably 100-140°C, in the liquid absorbent desorber (106) to cause release of water vapour from the water enriched liquid absorbent.

9. A method according to any one of the preceding claims, further comprising operating the liquid absorbent absorber (104), and/or the liquid absorbent desorber (106) in continuous operating mode.

10. A method according to any one of the preceding claims, further comprising cleaning a carbon dioxide containing process gas being a carbon dioxide rich flue gas containing at least 40 % by volume of carbon dioxide and being generated in an oxy-fuel boiler (2).

11. A gas purification system for cleaning a carbon dioxide containing process gas generated in a boiler (2) combusting a fuel in the presence of a gas containing oxygen gas, the gas purification system comprising:
a liquid absorbent absorber (104) for removing at least a portion of a water vapour content of the carbon dioxide containing process gas by bringing the process gas into contact with a liquid absorbent to form a carbon dioxide containing process gas with a reduced content of water vapour and a water enriched liquid absorbent,
a liquid absorbent desorber (106) for heating the water enriched liquid absorbent formed in the liquid absorbent absorber (104) to cause a release of water vapour from the water enriched liquid absorbent to form a water lean liquid absorbent and a vent gas comprising water vapour,
a pipe (138) for returning water lean liquid absorbent from the liquid absorbent desorber (106) to the liquid absorbent absorber (104), and
a duct (48) for forwarding the vent gas to a position upstream of a gas treatment device (7, 8, 10, 36, 74, 90) treating the carbon dioxide containing process gas generated in the boiler (2) to clean the vent gas.

12. A gas purification system according to claim 11, further comprising an oxidation reactor (154) arranged upstream, as seen with respect to the flow of carbon dioxide containing process gas, of the liquid absorbent absorber (104) for consuming at least a portion of an oxygen gas content of the carbon dioxide containing process gas by utilizing at least a portion of the oxygen gas present in the carbon dioxide containing process gas as oxidant in a catalytic oxidation reaction occurring in the oxidation reactor (154).

13. A gas purification system according to any one of claims 11-12, further comprising a duct (48, 58; 60) forwarding the vent gas to the boiler (2).

14. A gas purification system according to any one of claims 11-13, wherein the liquid absorbent absorber (104) is arranged within and/or downstream of a low pressure compression unit (80) of a gas compression and purification unit (GPU) (40) operating to clean and compress the carbon dioxide containing process gas.

15. A boiler system (1) comprising a boiler (2) for combusting a fuel in the presence of a gas containing oxygen gas, a gas cleaning system (6) for cleaning a carbon dioxide containing process gas generated in the boiler (2), and a gas purification system (46) according to any one of claims 11-14 for removing at least a portion of a water vapour content of the carbon dioxide containing process gas.
